(19) Europäisches Patentamt
European Patent Office
Office européen des brevets

(11) **EP 4 708 262 A1**

(12) **EUROPEAN PATENT APPLICATION**
published in accordance with Art. 153(4) EPC

(43) Date of publication:
**11.03.2026  Bulletin 2026/11**

(21) Application number: **24800027.5**

(22) Date of filing: **04.03.2024**

(51) International Patent Classification (IPC):
***G09C 1/00*** (2006.01)

(52) Cooperative Patent Classification (CPC):
**G06F 21/60; G06F 21/71; G09C 1/00**

(86) International application number:
**PCT/JP2024/008141**

(87) International publication number:
**WO 2024/228296 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **01.05.2023  JP 2023075876**

(71) Applicant: **NTT DOCOMO BUSINESS, Inc.
Tokyo 100-8019 (JP)**

(72) Inventors:
• **TANAKA, Satoshi**
  **Tokyo 100-8019 (JP)**
• **SAKURAI, Yoichi**
  **Tokyo 100-8019 (JP)**
• **SAWADA, Masashi**
  **Tokyo 100-8019 (JP)**

(74) Representative: **Hoffmann Eitle
Patent- und Rechtsanwälte PartmbB
Arabellastraße 30
81925 München (DE)**

(54) **ANALYSIS DEVICE, ANALYSIS METHOD, AND ANALYSIS PROGRAM**

(57)    An analysis device according to the embodiment includes an acquisition unit, a calculation unit, and an output control unit. The acquisition unit acquires a share of a logarithmic value of a first value and a share of a logarithmic value of a second value by mapping of secure computation. The calculation unit calculates a difference between the share of the logarithmic value of the first value and the share of the logarithmic value of the second value by subtraction of secure computation. The acquisition unit acquires an exponential value of the difference by mapping of secure computation.

FIG.2

**Description**

[Technical Field]

The present invention relates to an analysis device, an analysis method, and an analysis program.

[Background Art]

In the related art, a secure computation system that performs statistical calculation while keeping data secret and provides a user with a statistic obtained as a result of the calculation is known. For example, the secure computation system may be used for analysis of data in a medical field or the like that handles important personal information.
In addition, a secure computation system that performs statistical processing on data in an encrypted state is known. For example, a technique for obtaining a parameter of logistic regression analysis using the data in an encrypted state is known (See, for example, Patent Literature 2).
In addition, Cox proportional hazard regression analysis that is a method similar to logistic regression analysis and is used for survival time analysis is known (See, for example, Patent Literature 3).

[Citation List]

[Patent Citation]

Patent Literature 1: International Publication Pamphlet No. WO 2019/124260 A
Patent Literature 2: Japanese Laid-open Patent Publication No. 2020-042128 A
Patent Literature 3: Japanese Laid-open Patent Publication No. 2008-299370 A

[Non Patent Citation]

Non Patent Literature 1: NTT Corp., System of Secure Computation and Principles thereof, (online), (searched on January 6, 2023), Internet <URL:https://www.rd.ntt/sil/project/sc/secure_computation.h tml>

[Summary of Invention]

[Technical Problem]

However, the technique in the related art has a problem that division by secure computation cannot be performed efficiently in some cases.
For example, a method of converting division a/b into a×(1/b) (where a and b are real numbers) and obtaining an approximate value of the division a/b using a conversion table of 1/b is known. Meanwhile, in this method, since the number of digits of the multiplied result increases, it is requested to correct the number of digits as appropriate. In addition, multiplication has a narrower numerical range than addition and subtraction.

[Solution to Problem]

In order to solve the above-described problems and achieve the object, an analysis device according to the present invention includes: a logarithmic value acquisition unit that acquires a share of a logarithmic value of a first value and a share of a logarithmic value of a second value by mapping of secure computation; a calculation unit that calculates a difference between the share of the logarithmic value of the first value and the share of the logarithmic value of the second value by subtraction of secure computation; and an exponential value acquisition unit that acquires an exponential value of the difference by mapping of secure computation.

[Advantageous Effects of Invention]

According to the present invention, division by secure computation can be efficiently performed.

[Brief Description of Drawings]

FIG. 1 is a diagram illustrating a configuration example of an analysis system according to an embodiment.
FIG. 2 is a diagram illustrating a configuration example of an analysis device according to the embodiment.
FIG. 3 is a diagram illustrating an example of a logarithmic table.
FIG. 4 is a diagram illustrating an example of an exponential table.
FIG. 5 is a flowchart illustrating a flow of division.
FIG. 6 is a diagram illustrating an example of a computer that executes an analysis program.

[Embodiments for Carrying Out the Invention]

Hereinafter, embodiments of an analysis device, an analysis method, and an analysis program according to the present application are described in detail with reference to the drawings. Note that the present invention is not limited to the embodiments described below.

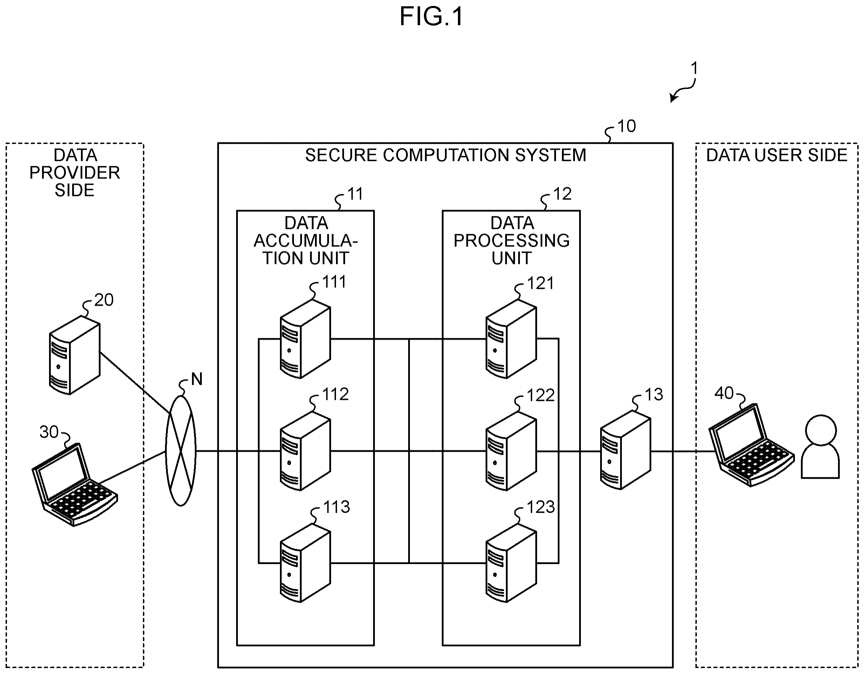

First, a configuration of an analysis system is described with reference to FIG. 1. The analysis system is a system for analyzing data using secure computation.

As illustrated in FIG. 1, an analysis system 1 includes a secure computation system 10. Furthermore, the secure computation system 10 is connected to a providing device 20 and a providing device 30 via a network N. For example, the network N is the Internet. In addition, the secure computation system 10 is connected to a terminal device 40.

The providing device 20 and the providing device 30 are devices on the data provider side. The providing device 20 and the providing device 30 provide (register) data to the secure computation system 10.

The data provided by the providing device 20 and the providing device 30 includes information (for example, personal information such as a name and an address of an individual) which is desirably concealed. For example, the providing device 20 and the providing device 30 provide medical care data or health examination data used in a medical institution. However, the data provided by the providing device 20 and the providing device 30 is not limited to data used in a medical institution.

The secure computation system 10 includes a data accumulation unit 11 and a data processing unit 12. The data accumulation unit 11 includes a plurality of accumulation devices (an accumulation device 111, an accumulation device 112, and an accumulation device 113) that accumulate data by secret sharing. In addition, the data processing unit 12 includes a plurality of calculation devices (a calculation device 121, a calculation device 122, and a calculation device 123) that process data by secure computation. Note that the number of accumulation devices and the number of calculation devices are not limited to the example illustrated in FIG. 1.

The secure computation system 10 can perform secret sharing and secure computation according to the method described in Non-Patent Literature 1 (posted URL: https://www.rd.ntt/sil/project/sc/secure_computation.html).

First, the data provided to the secure computation system 10 is divided (fragmented) into a plurality of shares. Then, the plurality of shares are distributed into and accumulated in a plurality of accumulation devices included in the data accumulation unit 11. In the example of FIG. 1, the provided data is divided into three shares. Then, the accumulation device 111, the accumulation device 112, and the accumulation device 113 accumulate shares one by one.

The data processing unit 12 performs secure computation on the share accumulated in the data accumulation unit 11. The data processing unit 12 executes secure computation by multi-party computation using a plurality of calculation devices. In the example of FIG. 1, the data processing unit 12 executes secure computation by the calculation device 121, the calculation device 122, and the calculation device 123.

The data processing unit 12 can perform various statistical operations without restoring the share. For example, the data processing unit 12 can perform an operation of a table such as sorting and combining, aggregation of the number of records, calculation of statistics such as a total sum, an average, a maximum value, a minimum value, and a sample variance, and a statistical test such as t-test. Furthermore, the data processing unit 12 can perform statistical analysis such as regression analysis and principal component analysis.

An analysis device 13 analyzes data using the data processing unit 12. The analysis device 13 provides an analysis result to the terminal device 40 on the data user side based on the result of the secure computation executed by the data processing unit 12. The user can obtain an analysis result of data via the terminal device 40.

For example, the secure computation system 10 may be provided with data related to attributes and bodies for each individual. The data related to the attribute and the body is personal information that is desirably concealed. The data related to the attributes and the bodies includes, for example, ages, genders, heights, weights, and the like. The data accumulation unit 11 stores a share obtained by fragmenting the provided data in each accumulation device.

Note that each divided share is data that is singly meaningless. Therefore, the original data cannot be restored from one share. Meanwhile, it is possible to restore the original data by gathering a plurality of shares.

The user of the data cannot view the registered data itself but can view the analysis result of the data via the analysis device 13 and the terminal device 40. For example, when the data includes the gender and the weight of an individual, the user cannot view the gender and the weight of each individual but can view the "average weight of men" that is an analysis result of the data.

As an example, the data accumulation unit 11 can perform secret sharing by using a technique referred to as Shamir's threshold secret sharing method. At this time, the data accumulation unit 11 stores, as shares, three coordinates passing through a polynomial having the original data as an intercept in each server. In addition, since the inclination of the polynomial is randomly determined, even if the original data is the same, the share is not necessarily the same every time. The original data may be a numerical value or data converted into a numerical value.

The secure computation system 10 can restore the original data from a plurality of shares. If the polynomial is a linear expression, the secure computation system 10 can obtain the intercept (corresponding to the original data) from the intersection of a straight line connecting the two coordinates (corresponding to the share) and an axis. Meanwhile, since a straight line is not determined from one coordinate, the original data cannot be restored.

In addition, as described above, the data processing unit 12 can perform secure computation on the original data without restoring the share. For example, the result of adding the shares represented by the coordinates corresponds to the share of the result of adding the original data of each share.

The analysis device 13 causes the data processing unit 12 to execute processing by secure computation in response to a request from the terminal device 40. Note that the data processing unit 12 or the terminal device 40 may embody a function equivalent to that of the analysis device 13. For example, the analysis system 1 may be a configuration not including the analysis device 13. In that case, the terminal device 40 is connected to the data processing unit 12 and executes processing equivalent to that of the analysis device 13. Furthermore, the statistical operation based on the share may be executed by the terminal device 40 instead of the data processing unit 12.

In the first embodiment, an example in which the analysis device 13 performs division by secure computation is described.

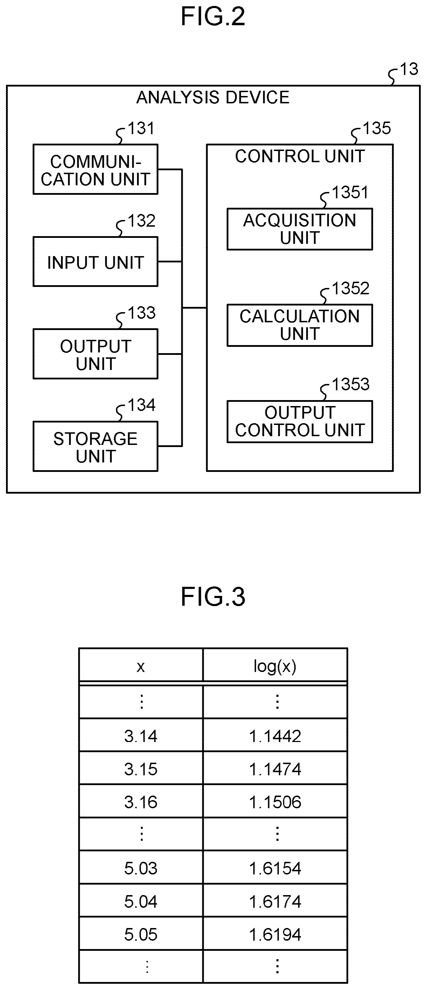

A configuration of the analysis device 13 is described with reference to FIG. 2. FIG. 2 is a diagram illustrating a configuration example of the analysis device according to the embodiment.

Each unit of the analysis device 13 is described. As illustrated in FIG. 2, the analysis device 13 includes a communication unit 131, an input unit 132, an output unit 133, a storage unit 134, and a control unit 135.

The communication unit 131 performs data communication between other devices. For example, the communication unit 131 is a network interface card (NIC). The communication unit 131 can transmit and receive data to and from other devices.

The input unit 132 is an interface for receiving input of data. The input unit 132 is connected, for example, to an input device such as a mouse and a keyboard.

The output unit 133 is an interface for outputting data. The output unit 133 is connected, for example, to an input device such as a display and a speaker.

The storage unit 134 is a storage device such as a hard disk drive (HDD), a solid state drive (SSD), or an optical disk. Note that the storage unit 134 may be a semiconductor memory capable of rewriting data, such as a random access memory (RAM), a flash memory, or a non volatile static random access memory (NVSRAM). The storage unit 134 stores an operating system (OS) and various programs executed by the analysis device 13.

The control unit 135 controls the entire analysis device 13. The control unit 135 is, for example, an electronic circuit such as a central processing unit (CPU), a micro processing unit (MPU), or a graphics processing unit (GPU), or an integrated circuit such as an application specific integrated circuit (ASIC) or a field programmable gate array (FPGA). In addition, the control unit 135 includes an internal memory for storing programs and control data defining various processing procedures and executes each process using the internal memory.

The control unit 135 functions as various processing units by various programs operating. For example, the control unit 135 includes an acquisition unit 1351, a calculation unit 1352, and an output control unit 1353.

The acquisition unit 1351 and the calculation unit 1352 perform division by secure computation. The output control unit 1353 outputs the result of the division.

A case where the acquisition unit 1351 and the calculation unit 1352 calculate the division a/b (where a and b are real numbers) is described. a is a first value. b is a second value. Also, the acquisition unit 1351 also functions as a log acquisition unit and an exponent acquisition unit.

First, the acquisition unit 1351 acquires the share of a and the share of b. Then, the acquisition unit 1351 acquires the share of a logarithmic value log (a) of a from the share of a using the mapping of the secure computation. Also, the acquisition unit 1351 acquires the share of a logarithmic value log (b) of b from the share of b using the mapping of the secure computation.

The mapping of secure computation is a technique of acquiring the value of a function f(x) from a calculation table while hiding x (without restoring the share). Note that the calculation table includes a logarithmic table and an exponential table. The acquisition unit 1351 executes mapping of secure computation.

Here, it is assumed that the base of the logarithm is e (Napier's constant). However, the base of the logarithm may be a value other than e such as 10.

The calculation unit 1352 calculates the share of log (a)-log (b) by subtraction of the secure computation. Further, based on the share of log (a)-log (b), the share of the exponential value of log (a)-log (b), that is, log (a/b), is acquired from the exponential table.

Here, a = 5.04 and b = 3.15. In this case, the acquisition unit 1351 can acquire the share of the logarithm of each value with reference to the logarithmic table illustrated in FIG. 3. FIG. 3 is a diagram illustrating an example of a logarithmic table.

The acquisition unit 1351 acquires the share of log (b) as in Formula (1). Also, the acquisition unit 1351 acquires the share of log (a) as in Formula (2).

$$\log(b) \cong 1.1474 \qquad \cdots (1)$$

$$\log(a) \cong 1.6174 \qquad \cdots (2)$$

Then, the calculation unit 1352 obtains the share of log (a/b) by calculating the subtraction log (a)-log (b) of the secure computation as in Formula (3).

$$\log\left(\frac{a}{b}\right) = 0.4700 \qquad \cdots (3)$$

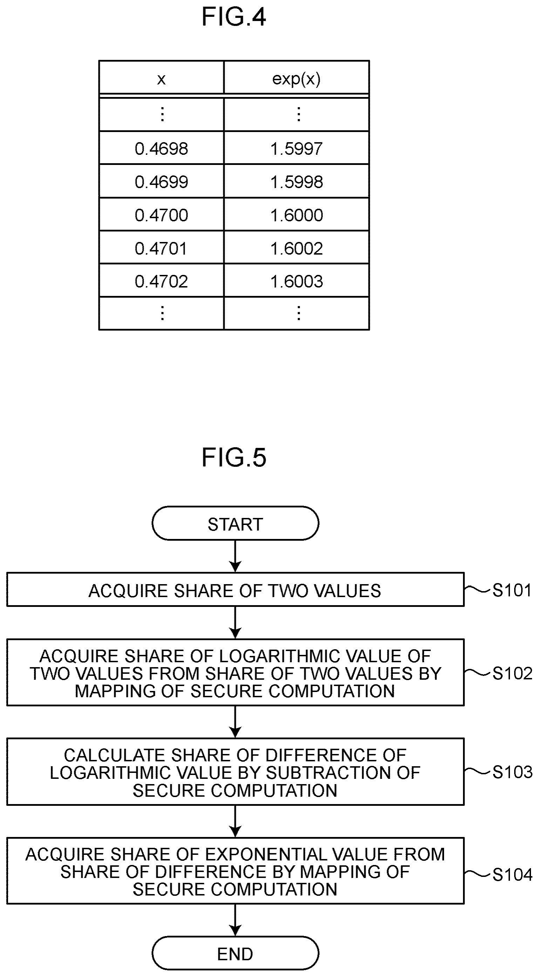

Further, the acquisition unit 1351 refers to the exponential table illustrated in FIG. 4 and acquires log (a/b), that is, the share of 1.6000 that is an exponential value of 0.4700 as in Formula (4).

$$\exp\left(\log\left(\frac{a}{b}\right)\right) = \frac{a}{b} \cong 1.6000 \qquad \cdots (4)$$

FIG. 5 is a flowchart illustrating a flow of division. As illustrated in FIG. 5, the analysis device 13 acquires shares of two values (divided number and dividing number) to be divided (Step S101).

Next, the analysis device 13 acquires the share of the logarithmic value of the two values from the share of the two values by the mapping of the secure computation (Step S102).

Subsequently, the analysis device 13 calculates the share of the difference of logarithmic values by subtraction of the secure computation (Step S103). Then, the analysis device 13 acquires the share of the exponential value from the share of the difference by the mapping of the secure computation (Step S104).

Note that the analysis device 13 can obtain a solution of division in a state other than the share by restoring the share of the difference acquired in Step S104.

(Effects of Embodiment)

As described above, the analysis device 13 includes the acquisition unit 1351, the calculation unit 1352, and the output control unit 1353. The acquisition unit 1351 acquires the share of the logarithmic value of the first value and the share of the logarithmic value of the second value by the mapping of the secure computation. The calculation unit 1352 calculates the difference between the share of the logarithmic value of the first value and the share of the logarithmic value of the second value by the subtraction of the secure computation. The acquisition unit 1351 acquires the exponential value of the difference by the mapping of the secure computation.

According to the present embodiment, as compared with a method of obtaining an approximate value by converting division a/b into a×(1/b), the necessity of correction of the number of digits is reduced, and division by secure computation can be efficiently performed. Furthermore, according to the present embodiment, the number of digits can be adjusted in advance in the conversion table. Furthermore, according to the present embodiment, since processing is performed by subtraction, it is possible to loosen the restrictions on the input values (a and b).

(System Configuration and the Like)

In addition, each component of each illustrated device is functionally conceptual and does not necessarily need to be physically configured as illustrated. That is, a specific form of distribution and integration of each device is not limited to the illustrated form and can be configured by functionally or physically distributing or integrating all or a part thereof in any unit according to various loads, usage conditions, and the like.

Furthermore, all or any part of each processing function performed in each device can be embodied by a central processing unit (CPU) and a program analyzed and executed by the CPU or can be embodied as hardware by wired logic. Note that the program may be executed not only by the CPU but also by another processor such as a GPU.

In addition, among the processes described in the present embodiment, all or some of the processes described as being automatically performed can be manually performed, or all or some of the processes described as being manually performed can be automatically performed by a known method. In addition, the processing procedure, the control procedure, the specific name, and the information including various pieces of data and various parameters illustrated in the document and the drawings can be arbitrarily changed unless otherwise specified.

(Program)

As an embodiment, the analysis device 13 can be implemented by installing an analysis program for executing the above analysis processing as package software or online software in a desired computer. For example, by causing the information processing apparatus to execute the above analysis program, the information processing apparatus can be caused to function as the analysis device 13. The information processing apparatus described here includes a desktop or notebook personal computer. In addition, the information processing apparatus includes mobile communication terminals such as a smartphone, a mobile phone, and a personal handyphone system (PHS), and a slate terminal such as a personal digital assistant (PDA) and the like are included in the category thereof.

Furthermore, the analysis device 13 can also be implemented as an analysis server device that uses, as a client, a terminal device used by the user and provides the client with a service related to the analysis processing. For example, the analysis server device is implemented as a server device that provides an analysis service in which two values a and b to be divided are input and an approximate value of a/b obtained by secure computation is output.

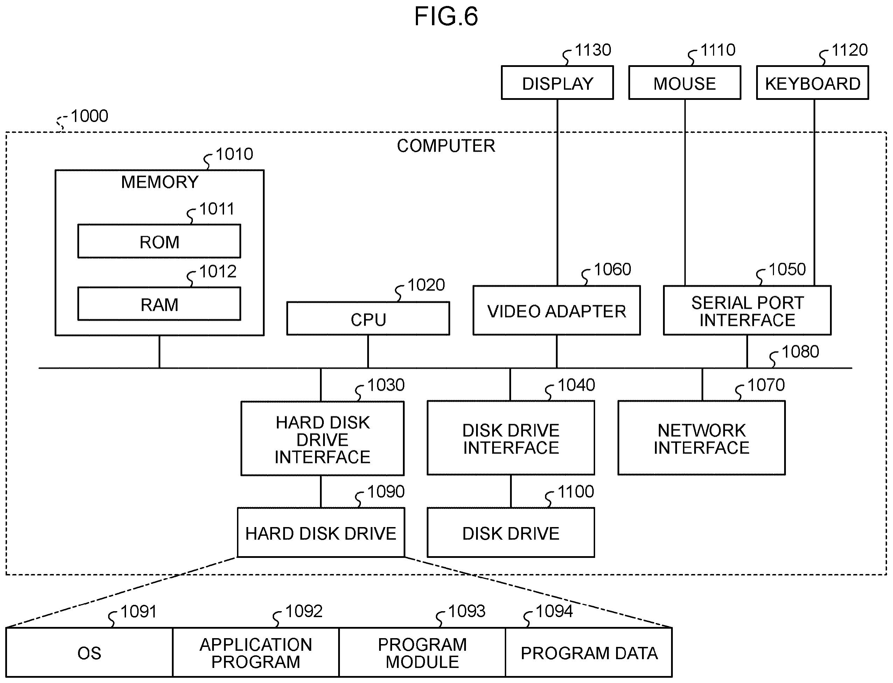

FIG. 6 is a diagram illustrating an example of a computer that executes the analysis program. A computer 1000 includes, for example, a memory 1010 and a CPU 1020. Also, the computer 1000 also includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, the program that defines each processing of the analysis device 13 is implemented as the program module 1093 in which a code executable by a computer is described. The program module 1093 is stored in, for example, the hard disk drive 1090. For example, the program module 1093 for executing processing similar to the functional configuration in the analysis device 13 is stored in the hard disk drive 1090. Note that the hard disk drive 1090 may be replaced with a solid state drive (SSD).

In addition, the setting data used in the processing of the embodiment described above is stored, for example, in the memory 1010 or the hard disk drive 1090 as the program data 1094. Then, the CPU 1020 reads the program module 1093 and the program data 1094 stored in the memory 1010 and the hard disk drive 1090 to the RAM 1012 as necessary and executes the processing of the embodiment described above.

Note that the program module 1093 and the program data 1094 are not limited to a case of being stored in the hard disk drive 1090 and may be stored in, for example, a detachable storage medium and read by the CPU 1020 via the disk drive 1100 or the like. Alternatively, the program module 1093 and the program data 1094 may be stored in another computer connected via a network (local area network (LAN), wide area network (WAN), and the like). Then, the program module 1093 and the program data 1094 may be read by the CPU 1020 from another computer via the network interface 1070.

[Explanation of Reference]

| 1 | ANALYSIS SYSTEM |
| 10 | SECURE COMPUTATION SYSTEM |
| 11 | DATA ACCUMULATION UNIT |

| 12 | DATA PROCESSING UNIT |
| --- | --- |
| 13 | ANALYSIS DEVICE |
| 131 | COMMUNICATION UNIT |
| 132 | INPUT UNIT |
| 133 | OUTPUT UNIT |
| 134 | STORAGE UNIT |
| 135 | CONTROL UNIT |
| 1351 | ACQUISITION UNIT |
| 1352 | CALCULATION UNIT |
| 1353 | OUTPUT CONTROL UNIT |

**Claims**

1. An analysis device comprising:

   a logarithmic value acquisition unit that acquires a share of a logarithmic value of a first value and a share of a logarithmic value of a second value by mapping of secure computation;
   a calculation unit that calculates a difference between the share of the logarithmic value of the first value and the share of the logarithmic value of the second value by subtraction of secure computation; and
   an exponential value acquisition unit that acquires an exponential value of the difference by mapping of secure computation.

2. The analysis device according to claim 1,

   wherein the logarithmic value acquisition unit acquires a logarithmic value from a logarithmic table, and
   the exponential value acquisition unit acquires an exponential value from an exponential table.

3. An analysis method executed by an analysis device, the analysis method comprising:

   a logarithmic value acquisition step of acquiring a share of a logarithmic value of a first value and a share of a logarithmic value of a second value by mapping of secure computation;
   a calculation step of calculating a difference between the share of the logarithmic value of the first value and the share of the logarithmic value of the second value by subtraction of secure computation; and
   an exponential value acquisition step of acquiring an exponential value of the difference by mapping of secure computation.

4. An analysis program that causes a computer to execute a process comprising:

   a logarithmic value acquisition step of acquiring a share of a logarithmic value of a first value and a share of a logarithmic value of a second value by mapping of secure computation;
   a calculation step of calculating a difference between the share of the logarithmic value of the first value and the share of the logarithmic value of the second value by subtraction of secure computation; and
   an exponential value acquisition step of acquiring an exponential value of the difference by mapping of secure computation.

# FIG.1

# FIG.2

ANALYSIS DEVICE　⌇13

COMMUNI-CATION UNIT　⌇131

INPUT UNIT　⌇132

OUTPUT UNIT　⌇133

STORAGE UNIT　⌇134

CONTROL UNIT　⌇135

ACQUISITION UNIT　⌇1351

CALCULATION UNIT　⌇1352

OUTPUT CONTROL UNIT　⌇1353

# FIG.3

| x | log(x) |
|---|---|
| ⋮ | ⋮ |
| 3.14 | 1.1442 |
| 3.15 | 1.1474 |
| 3.16 | 1.1506 |
| ⋮ | ⋮ |
| 5.03 | 1.6154 |
| 5.04 | 1.6174 |
| 5.05 | 1.6194 |
| ⋮ | ⋮ |

# FIG.4

| x | exp(x) |
|---|---|
| ⋮ | ⋮ |
| 0.4698 | 1.5997 |
| 0.4699 | 1.5998 |
| 0.4700 | 1.6000 |
| 0.4701 | 1.6002 |
| 0.4702 | 1.6003 |
| ⋮ | ⋮ |

# FIG.5

START

ACQUIRE SHARE OF TWO VALUES — S101

ACQUIRE SHARE OF LOGARITHMIC VALUE OF TWO VALUES FROM SHARE OF TWO VALUES BY MAPPING OF SECURE COMPUTATION — S102

CALCULATE SHARE OF DIFFERENCE OF LOGARITHMIC VALUE BY SUBTRACTION OF SECURE COMPUTATION — S103

ACQUIRE SHARE OF EXPONENTIAL VALUE FROM SHARE OF DIFFERENCE BY MAPPING OF SECURE COMPUTATION — S104

END

# FIG.6

DISPLAY 1130  
MOUSE 1110  
KEYBOARD 1120  

1000 COMPUTER  

MEMORY 1010  
ROM 1011  
RAM 1012  

CPU 1020  
VIDEO ADAPTER 1060  
SERIAL PORT INTERFACE 1050  
1080  

HARD DISK DRIVE INTERFACE 1030  
DISK DRIVE INTERFACE 1040  
NETWORK INTERFACE 1070  

HARD DISK DRIVE 1090  
DISK DRIVE 1100  

OS 1091  
APPLICATION PROGRAM 1092  
PROGRAM MODULE 1093  
PROGRAM DATA 1094  

EP 4 708 262 A1

## INTERNATIONAL SEARCH REPORT

| International application No. |
| --- |
| **PCT/JP2024/008141** |

| A. | CLASSIFICATION OF SUBJECT MATTER |
| --- | --- |

*G09C 1/00*(2006.01)i
FI:   G09C1/00 650Z

According to International Patent Classification (IPC) or to both national classification and IPC

| B. | FIELDS SEARCHED |
| --- | --- |

Minimum documentation searched (classification system followed by classification symbols)

G09C1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/149104 A1 (NIPPON TELEGRAPH AND TELEPHONE CORPORATION) 29 July 2021 (2021-07-29)<br>claim 1, paragraph [0104] | 1-4 |
| A | WO 2020/250269 A1 (NIPPON TELEGRAPH AND TELEPHONE CORPORATION) 17 December 2020 (2020-12-17)<br>abstract | 1-4 |
| A | JP 54-69039 A (HITACHI DENSHI KABUSHIKI KAISHA) 02 June 1979 (1979-06-02)<br>page 1, lower right column, line 7 to page 2, upper right column, line 1 | 1-4 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

International application No.

**PCT/JP2024/008141**

| Patent document cited in search report | | | Publication date (day/month/year) | Patent family member(s) | | | Publication date (day/month/year) |
|---|---|---|---|---|---|---|---|
| WO | 2021/149104 | A1 | 29 July 2021 | US | 2022/0407682 | A1 | |
| | | | | claim 1, paragraph [0234] | | | |
| | | | | EP | 4095832 | A1 | |
| | | | | CN | 114981861 | A | |
| WO | 2020/250269 | A1 | 17 December 2020 | US | 2022/0224516 | A1 | |
| | | | | abstract | | | |
| | | | | EP | 3982282 | A1 | |
| | | | | CN | 113966511 | A | |
| JP | 54-69039 | A | 02 June 1979 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019124260 A
- JP 2020042128 A
- JP 2008299370 A

**Non-patent literature cited in the description**

- System of Secure Computation and Principles thereof. NTT Corp., 06 January 2023